# FASCICULE DE BREVET EUROPEEN

(11) **EP 3 111 591 B1**
(45) Date de publication et mention de la délivrance du brevet: **08.08.2018**
(21) Numéro de dépôt: 15705679.7
(22) Date de dépôt: 03.02.2015
(51) Int. Cl.: H04L 29/08, H04L 12/66, H04W 4/06, H04W 76/14, H04L 12/24

(54) **TECHNIQUE D'AIDE AU DIAGNOSTIC A DISTANCE D'UNE PASSERELLE D'ACCES**
VERFAHREN ZUR UNTERSTÜTZUNG DER FERNDIAGNOSE EINES ZUGANGSGATEWAYS
TECHNIQUE FOR ASSISTING REMOTE DIAGNOSIS OF AN ACCESS GATEWAY

(30) Priorité: 14.02.2014 FR 1451191
(43) Date de publication de la demande: 04.01.2017
(73) Titulaire: Orange, 75015 Paris (FR)
(72) Inventeur: BARANSKI, Fabrice, F-35135 Chantepie (FR); FONTAINE, Fabrice, F-35850 Geveze (FR); GLOANEC, Simon, F-35000 Rennes (FR)
(86) Numéro de dépôt international: PCT/FR2015/050249
(87) Numéro de publication internationale: WO 2015/121563

(56) Documents cités:
- WO-A1-2010/064964
- US-A1- 2007 201 508
- N/a: "CPE WAN Management Protocol, TR -069 Issue 1, Amendment 5 (CWMP Version: 1.4)", THE BROADBAND FORUM, 1 November 2013 (2013-11-01), pages 1-228, XP055372268, Retrieved from the Internet: URL:https://www.broadband-forum.org/techni cal/download/TR-069_Amendment-5.pdf [retrieved on 2017-05-12]

## Description

L'invention se rapporte au domaine général des télécommunications.

L'invention concerne plus particulièrement l'aide au diagnostic à distance d'une panne affectant une passerelle d'accès à partir d'un équipement d'administration.

La passerelle d'accès permet notamment à des équipements ou dispositifs localisés dans un site client d'accéder à un réseau de communication étendu WAN (pour « Wide Area Network »), tel que le réseau Internet. Ces dispositifs sont également appelés CPE, pour « Customer Premise Equipment ». Pour un réseau local, il s'agit notamment de la passerelle d'accès, d'un décodeur TV « Set-Top-Box », d'un terminal mobile. Dans le contexte d'un réseau domotique, il s'agit également d'équipements d'électroménager, de systèmes d'alarme, de capteurs.

Afin de garantir des services de qualité, il est préférable qu'un opérateur du réseau de communication étendu puisse gérer à distance de tels dispositifs.

La gestion à distance des dispositifs nécessite notamment :
- de détecter et de connaitre les dispositifs présents dans le réseau local, par exemple leurs numéros de série, leurs versions matérielle et logicielle ;
- de superviser ces dispositifs, par exemple en obtenant des informations de supervision et des indicateurs de performance.

La gestion à distance des dispositifs d'un réseau local s'appuie sur un rapport technique élaboré par le Broadband Forum, TR-069 « CPE WAN Management Protocol ». Ce rapport technique définit un protocole CWMP, permettant la communication entre un équipement d'administration, appelé équipement d'auto-configuration distant ACS (pour « Auto-configuration Server »), et un dispositif du réseau local. Le protocole CWMP définit un mécanisme qui permet notamment une auto-configuration sécurisée des équipements du réseau local et d'autres fonctions de gestion de ces dispositifs.

Il est notamment possible à l'opérateur du réseau d'effectuer des interventions à distance, telles que :
- mettre à jour le logiciel (« software ») ou le microcode (« firmware ») d'un dispositif, lorsqu'une évolution de la version logicielle ou du microcode est requise ;
- effectuer un diagnostic lorsqu'un dispositif présente un disfonctionnement ;
- installer et configurer dynamiquement de nouveaux services ;
- superviser l'état et les performances d'un dispositif.

Le protocole CWMP s'appuie sur le protocole Internet, plus précisément sur TCP/IP (pour « Transmission Control Protocol »). Les données permettant la gestion à distance des dispositifs du réseau, par exemple des données d'aide au diagnostic, sont transmises par chaque dispositif à l'équipement d'administration au moyen du protocole CWMP. Lorsque l'accès au réseau de communication étendu WAN n'est plus possible par l'intermédiaire de la passerelle d'accès, il est alors impossible de contacter l'équipement d'administration pour lui transmettre des données d'aide au diagnostic.

Par conséquent, il est impossible pour un conseiller support client de l'opérateur de récupérer automatiquement les données d'aide au diagnostic lorsque la passerelle d'accès ne permet plus un accès au réseau de communication étendu. Le conseiller doit alors interroger oralement le client pour pouvoir établir un diagnostic technique, ce qui rend ce travail difficile et peu fiable.

Un des buts de l'invention est de remédier à des insuffisances/inconvénients de l'état de la technique et/ou d'y apporter des améliorations.

Selon un premier aspect, l'invention a pour objet un procédé d'aide au diagnostic à distance par un équipement d'administration d'une passerelle d'accès, ladite passerelle permettant un accès à un réseau de communication étendu par l'intermédiaire d'un réseau d'accès. Le procédé comprend les étapes de :
- détection d'une panne affectant l'accès de la passerelle au réseau de communication étendu par l'intermédiaire dudit réseau d'accès ;
- obtention par un dispositif d'un identifiant de la passerelle d'accès et d'une donnée d'aide à un diagnostic de la panne au moyen d'un canal de communication radio ;
- envoi par ledit dispositif à l'équipement d'administration dudit identifiant et de ladite donnée obtenus par l'intermédiaire d'un moyen d'accès en état de fonctionnement.

Par panne affectant un accès de la passerelle au réseau de communication étendu, on entend par la suite aussi bien une panne d'un élément matériel de la passerelle contribuant à cet accès qu'une panne associée à la connexion de la passerelle au réseau d'accès. La panne peut ainsi se situer dans le réseau d'accès lui-même et affecter une pluralité de passerelles d'accès. La passerelle d'accès n'est pas agencée pour déterminer où se situe la panne mais peut indiquer par un code de panne spécifique l'effet de cette panne sur son accès au réseau de communication étendu.

Ainsi, grâce au canal de communication radio, la passerelle d'accès transfère son identifiant et une donnée d'aide au diagnostic à un dispositif jouant un rôle de mandataire pour un service d'aide au diagnostic, afin que ce dispositif puisse transmettre les informations à l'équipement d'administration à la place de la passerelle affectée par la panne. Ceci permet à l'équipement d'administration d'obtenir une visibilité sur le type de panne affectant l'accès de la passerelle et de déclencher des actions correctives comme s'il avait reçu les informations directement de la passerelle affectée par la panne. Actuellement, un utilisateur du réseau local doit contacter un opérateur du service après-vente pour lui signaler la panne. L'utilisateur n'est généralement pas capable de fournir des informations détaillées sur le type de panne. Par la mise en oeuvre du procédé d'aide au diagnostic, un certain nombre de pannes peut être résolu directement à partir de l'équipement d'administration sans intervention de l'utilisateur. La donnée d'aide au diagnostic permet également à l'équipement d'administration de déclencher des actions correctives adaptées à la panne en cours, ne nécessitant pas des actions de la part de l'utilisateur. Le parcours utilisateur est simplifié et la durée de la panne peut être diminuée dans une majorité de cas de panne. Ceci permet également à l'équipement d'administration de détecter une panne au niveau du réseau d'accès affectant une pluralité de passerelles d'accès.

Le dispositif jouant le rôle de mandataire peut être un dispositif du réseau local ou bien un dispositif extérieur au réseau local. Il peut s'agir aussi bien d'un terminal mobile disposant d'un accès radio au réseau de communication étendu que d'une autre passerelle d'accès disposant d'un accès en état de fonctionnement. Il est ici souligné que la mise en oeuvre du procédé ne nécessite pas d'ajout d'équipement dans le réseau local mais s'appuie au contraire sur un environnement du réseau local. La solution proposée est ainsi très simple à mettre en place.

Les différents modes ou caractéristiques de réalisation mentionnés ci-après peuvent être ajoutés indépendamment ou en combinaison les uns avec les autres, aux étapes du procédé d'aide au diagnostic tel que défini précédemment.

Dans un mode de réalisation particulier, le procédé d'aide au diagnostic comprend en outre un appairage dudit dispositif avec la passerelle d'accès pour obtenir ledit identifiant et ladite donnée.

L'envoi de l'identifiant de la passerelle et la donnée d'aide au diagnostic est ainsi déclenché après appairage entre la passerelle d'accès et le dispositif jouant le rôle de mandataire.

Dans un mode de réalisation particulier, le procédé d'aide au diagnostic comprend en outre une détection par la passerelle d'accès dudit dispositif.

Dans ce mode de réalisation, la passerelle d'accès affectée par la panne recherche un dispositif avec lequel elle peut établir un canal de communication radio afin que ce dispositif joue le rôle de mandataire pour le service d'aide au diagnostic. Ceci est transparent pour l'utilisateur, qui n' a aucune action à effectuer.

Selon une caractéristique particulière, le procédé d'aide au diagnostic comprend en outre une diffusion par le dispositif d'une donnée indiquant qu'un service de mandataire d'aide au diagnostic est disponible.

La passerelle d'accès peut ainsi directement sélectionner un dispositif offrant ce service d'aide au diagnostic. Ceci permet d'éviter de contacter des dispositifs n'offrant pas ce service. La communication de l'identifiant et de la donnée d'aide au diagnostic est ainsi plus rapide.

Selon un deuxième aspect, l'invention concerne également un passerelle d'accès agencée pour permettre un accès à un réseau de communication étendu par l'intermédiaire d'un réseau d'accès. La passerelle comprend :
- un module d'administration, agencé pour envoyer et recevoir des données d'administration à distance en provenance d'un équipement d'administration ;
- un module de détection d'une panne affectant l'accès de la passerelle au réseau de communication étendu par l'intermédiaire dudit réseau d'accès ;
- un module d'envoi à un dispositif d'un identifiant de la passerelle d'accès et d'une donnée d'aide à un diagnostic de la panne au moyen d'un canal de communication radio, ledit identifiant et ladite donnée étant destinés à être envoyés par ledit dispositif audit équipement d'administration par l'intermédiaire d'un moyen d'accès en état de fonctionnement.

Les avantages énoncés pour le procédé d'administration selon le premier aspect sont transposables directement à la passerelle d'accès.

Selon un troisième aspect, l'invention concerne également un dispositif d'aide au diagnostic d'une panne affectant un accès d'une passerelle d'accès à un réseau de communication étendu par l'intermédiaire d'un réseau d'accès, ledit dispositif comprenant :
- un module d'obtention d'un identifiant de la passerelle d'accès et d'une donnée d'aide à un diagnostic de la panne au moyen d'un canal de communication radio et d'envoi à un équipement d'administration dudit identifiant et de ladite donnée obtenus par l'intermédiaire d'un moyen d'accès en état de fonctionnement, ledit équipement d'administration étant prévu pour administrer à distance la passerelle d'accès.

Les avantages énoncés pour le procédé d'aide au diagnostic selon le premier aspect sont transposables directement au dispositif.

Selon un quatrième aspect, l'invention concerne également un système comprenant une passerelle d'accès selon le deuxième aspect et au moins un dispositif selon le troisième aspect.

Les avantages énoncés pour le procédé d'aide au diagnostic selon le premier aspect sont transposables directement au système.

Selon un cinquième aspect, l'invention concerne un programme pour une passerelle d'accès, comprenant des instructions de code de programme destinées à commander l'exécution de celles des étapes du procédé d'aide au diagnostic précédemment décrit mises en oeuvre par la passerelle d'accès, lorsque ce programme est exécuté par cette passerelle et un support d'enregistrement lisible par une passerelle d'accès sur lequel est enregistré un programme pour une passerelle.

Les avantages énoncés pour le procédé d'aide au diagnostic selon le premier aspect sont transposables directement au programme pour une passerelle d'accès et au support d'enregistrement.

Selon un sixième aspect, l'invention concerne un programme pour un dispositif, comprenant des instructions de code de programme destinées à commander l'exécution de celles des étapes du procédé d'aide au diagnostic précédemment décrit mises en oeuvre par le dispositif, lorsque ce programme est exécuté par ce dispositif et un support d'enregistrement lisible par un dispositif sur lequel est enregistré un programme pour un dispositif.

Les avantages énoncés pour le procédé d'aide au diagnostic selon le premier aspect sont transposables directement au programme pour un dispositif et au support d'enregistrement.

L'invention sera mieux comprise à l'aide de la description suivante de modes de réalisation particuliers de la technique d'aide au diagnostic à distance d'un dispositif, en référence aux dessins annexés sur lesquels :
- les figures 1a et 1b représentent un système d'aide au diagnostic à distance dans un réseau de communication selon deux modes de réalisation ;
- la figure 2 illustre des étapes d'un procédé d'aide au diagnostic selon un mode particulier de réalisation ;
- la figure 3 représente une passerelle d'accès selon un mode particulier de réalisation ;
- la figure 4 représente un dispositif jouant un rôle de mandataire selon un mode particulier de réalisation.

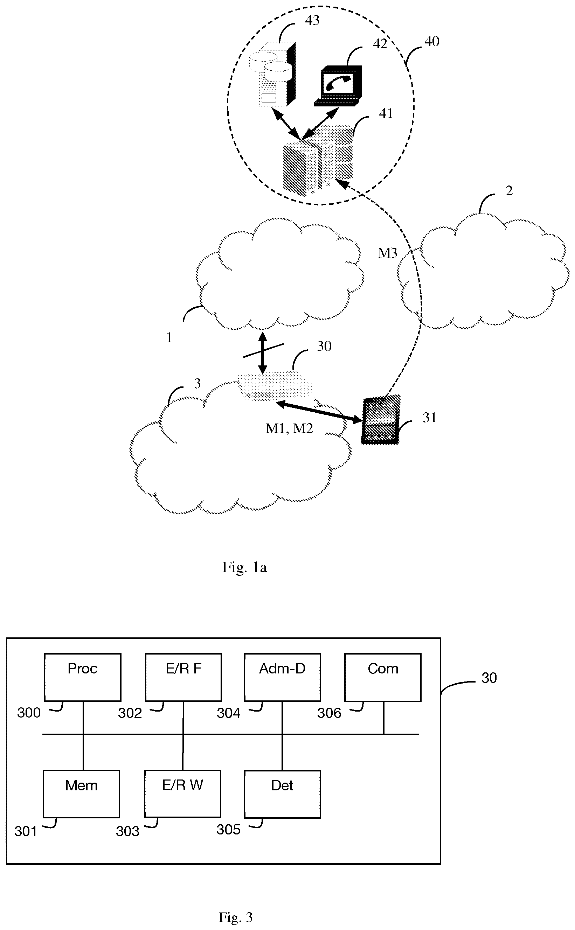

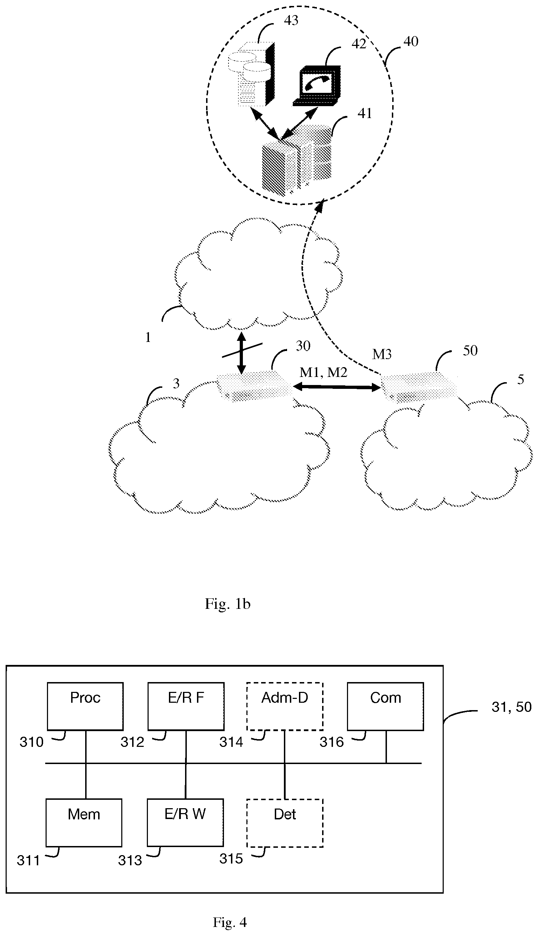

Les figures 1a et 1b représentent, dans son environnement, un réseau de communication privé ou local 3 administré à distance par un système d'administration 40. Le protocole IP (pour « Internet Protocol ») est utilisé par les dispositifs dans le réseau privé pour communiquer entre eux et également pour communiquer avec un réseau de communication étendu ou WAN (pour « Wide Area Network »), tel que le réseau Internet.

Pour l'environnement représenté aux figures la et 1b, on entend par réseau de communication local 3 un réseau de type LAN (« Local Access Network »). Ce réseau peut être en particulier un réseau domestique ou un réseau d'entreprise. Une passerelle d'accès 30 est agencée pour fournir à des dispositifs du réseau local 3 un accès vers le réseau de communication étendu (par exemple Internet) par l'intermédiaire d'un réseau d'accès 1. Le réseau d'accès 1 est par exemple un réseau d'accès xDSL (pour « Digital Subscriber Line », le x indiquant qu'il peut s'agir d'un réseau ADSL, HSDL, VDSL, ...). Il peut également s'agir d'un réseau FTTH (pour « Fiber To The Home »). Aucune limitation n'est attachée au type du réseau d'accès 1.

Le réseau local 3 peut être aussi bien un réseau filaire de type Ethernet, selon la norme IEEE 802.3, qu'un réseau sans fil de type Wi-Fi, selon la norme IEEE 802.11 ou bien encore un réseau par courant porteur en ligne CPL.

Les dispositifs du réseau local 3 peuvent être n'importe quels dispositifs, par exemple domestiques, disposant d'une connexion réseau filaire ou sans-fil. Il peut s'agir par exemple, d'un ordinateur, d'une tablette tactile, d'un téléphone mobile 31, d'un poste de radio connecté, d'un téléphone fixe, d'un rétroprojecteur, d'une télévision, d'un décodeur TV (« Set-Top Box »), d'une console de jeux, de dispositifs électroménagers, etc.

Le système d'administration 40 regroupe une pluralité d'équipements permettant à l'opérateur du réseau de communication d'administrer et de superviser des dispositifs, notamment des dispositifs appartenant à des réseaux locaux, dont la passerelle d'accès. Le système d'administration 40 comprend notamment un équipement d'administration 41, également appelé serveur d'auto-configuration ACS (pour «Auto-Configuration Server »), un centre d'appel 42 et des centres de support 43 opérationnels (OSS, pour « Operational Support System ») ou orientés métiers (BSS, pour « Business Support System »).

Dans le mode de réalisation décrit, l'équipement d'administration 41 dialogue avec les dispositifs du réseau local 3 en vue de leur administration selon le protocole de gestion à distance CWMP (« CPE WAN Management Protocol ») défini dans le rapport technique TR-069 élaboré par le Broadband Forum.

Au moyen du protocole CWMP, l'équipement d'administration 41 peut notamment :
- obtenir et gérer à distance un état du réseau local 3, des dispositifs qui lui sont connectés ;
- initier des tests de diagnostics ;
- télécharger des fichiers de logiciel ou de microcode et
- gérer des événements.

L'application d'administration à distance utilise le protocole CWMP et s'appuie sur des couches protocolaires TCP/IP, SSL/TLS (pour « Secure Sockets Layer / Transport Layer Security », HTTP (pour « HyperText Transfer Protocol »), SOAP (pour « Simple Object Access Protocol »), RPC (pour « Remote Procedure Call »).

Le rapport technique TR-069 prévoit qu'un dispositif 30 du réseau local 3 établit sous certaines conditions une connexion avec l'équipement d'administration 41 et une procédure « Inform RPC » est exécutée. Au cours de cette procédure, le dispositif 30-37 du réseau local 3 transmet différentes données d'administration le concernant. Les données d'administration reçues lors de cette procédure « Inform RPC » sont mémorisées dans une base de données (non représentée sur les figures 1a et 1b) et permettent ensuite à l'équipement d'administration 41 de réaliser différentes tâches de gestion du dispositif. Les données d'administration comprennent en particulier une ou plusieurs données d'aide à un diagnostic. A titre d'exemple illustratif, la donnée LastConnectionError permet de fournir la cause de la dernière erreur de connexion dans une procédure « Inform RPC ». Toujours à titre d'exemple illustratif, les données ou objets IPPingDiagnostics, WANDSLDiagnostics ou WANATMF5LoopbackDiagnostics permettent de fournir des informations de diagnostic plus détaillées dans une procédure « Inform RPC ». Ces différentes données sont définies plus précisément dans le rapport TR-069.

La passerelle d'accès 30 est identifiée auprès de l'équipement d'administration 41 au moyen d'un identifiant unique ID. A titre d'exemple illustratif, cet identifiant comprend un identifiant d'organisation OUI, pour « Organizationally Unique Identifier », codé sur 24 bits. Un tel identifiant OUI est attribué à un constructeur ou à une organisation et est utilisé dans la famille des normes 802 LAN, tels que Ethernet, l'anneau à jeton (« Token Ring »), ... L'identifiant unique ID comprend également des données telles qu'une classe de produit et un numéro de série.

La figure la illustre un premier mode de réalisation du système permettant de mettre en oeuvre le procédé d'aide au diagnostic. Certains des dispositifs du réseau local 3 sont également agencés pour communiquer directement avec le réseau de communication étendu Internet par l'intermédiaire d'un réseau d'accès 2, distinct du réseau d'accès 1. Par directement, on comprend que la passerelle 30 n'intervient pas dans ces échanges, ni le réseau d'accès 1. Le réseau d'accès 2 est par exemple un réseau mobile de troisième ou de quatrième génération 3GPP. Le terminal mobile 31 dispose ainsi d'un moyen de communication direct avec le réseau de communication Internet. Dans ce premier mode de réalisation, le terminal mobile joue un rôle de mandataire pour un service d'aide au diagnostic.

La figure 1b illustre un deuxième mode de réalisation du système permettant de mettre en oeuvre la technique d'aide au diagnostic. Les parties communes entre les figures 1a et 1b ne sont pas détaillées de nouveau. Une deuxième passerelle d'accès 50 permet à des dispositifs d'un deuxième réseau local 5 d'accéder au réseau de communication étendu. Tel que représenté sur la figure 1b, cet accès s'effectue par l'intermédiaire du réseau d'accès 1. Aucune limitation n'est attachée à cette représentation. Le raccordement de la passerelle d'accès 50 peut s'effectuer par l'intermédiaire d'un autre réseau d'accès. L'équipement d'administration 41 dialogue également avec les dispositifs du réseau local 5, dont la passerelle d'accès 50, en vue de leur administration selon le protocole de gestion à distance CWMP.

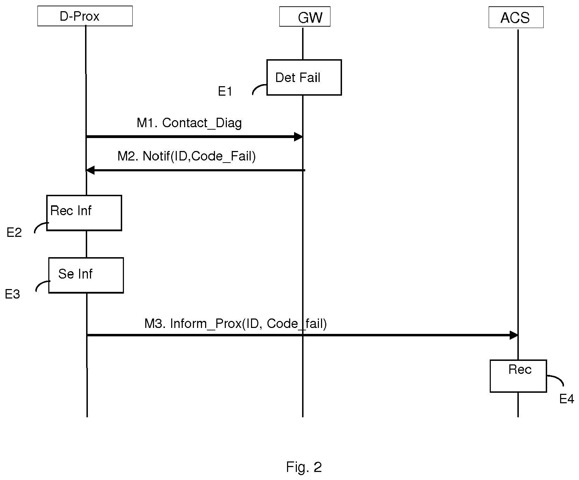

Nous allons maintenant décrire la technique d'aide au diagnostic dans un mode particulier de réalisation, tel qu'elle est mise en oeuvre par l'équipement d'administration 41, la passerelle d'accès 30 et un dispositif jouant un rôle de mandataire de la passerelle d'accès vis-à-vis de l'équipement d'administration dans l'environnement des figures la et 1b, en relation avec la figure 2.

Dans une première étape E1, la passerelle d'accès 30 détecte qu'une panne affecte l'accès de la passerelle au réseau de communication étendu par l'intermédiaire du réseau d'accès 1. Cette panne correspond par exemple à une désynchronisation DSL à cause de bruits impulsifs sur le lien du réseau d'accès, un problème DHCP (« Dynamic Host Configuration Protocol »), une panne matérielle au niveau de l'interface vers le réseau d'accès 1. Aucune limitation n'est attachée au type de panne. Cette panne rend impossible tout accès au réseau de communication étendu, et empêche la communication d'une donnée d'aide au diagnostic à l'équipement d'administration 41.

Dans une deuxième étape E2, le dispositif mandataire obtient l'identifiant unique ID de la passerelle d'accès 30 et une donnée d'aide à un diagnostic de la panne au moyen d'un canal de communication radio. Cet identifiant et la donnée d'aide au diagnostic sont transmis dans un message M2. La donnée d'aide au diagnostic correspond à une information permettant à l'équipement d'administration 41 d'identifier la panne. A titre d'exemples limitatifs, un code 1 indique que la panne affecte l'interface d'accès, un code 2 que la panne est associée à un dysfonctionnement de la couche OSI, ...

Dans une troisième étape E3, le dispositif mandataire envoie à l'équipement d'administration 41 l'identifiant et la donnée obtenus par l'intermédiaire d'un moyen d'accès en état de fonctionnement. Cet identifiant et la donnée d'aide au diagnostic sont transmis dans un message M3 vers l'équipement d'administration 41.

Dans une quatrième étape E4, l'équipement d'administration 41 reçoit le message M3 et détermine que le message M3 comprend des informations que le dispositif a envoyées en tant que mandataire. L'équipement d'administration 41 identifie la passerelle concernée grâce à l'identifiant de la passerelle d'accès affectée par la panne. L'équipement d'administration 41 détermine également à partir de la ou des données d'aide au diagnostic l'objet de la panne. A partir des informations de configuration de la passerelle d'accès affectée par la panne, l'équipement d'administration 41 peut alors déclencher des actions visant au rétablissement de l'accès pour la passerelle. L'équipement d'administration 41 peut également déterminer qu'un problème se situe dans le réseau d'accès lui-même lorsqu'une pluralité de passerelles d'accès détecte une panne identique et peut déclencher des actions correctives dans le réseau d'accès afin de rétablir l'accès.

Il est ici souligné que le dispositif jouant le rôle de mandataire est uniquement utilisé pour collecter et transmettre une ou des données d'aide au diagnostic. Il ne s'agit pas de remplacer l'accès offert par la passerelle, qui n'est plus opérationnel, par celui du dispositif jouant le rôle de mandataire, en état de fonctionnement. Seul le trafic associé au service d'aide au diagnostic est acheminé par l'accès du dispositif. Le volume des données est ainsi limité en comparaison du volume de l'ensemble du trafic généré par les équipements du réseau local.

Dans un premier mode de réalisation, le terminal mobile 31 joue le rôle de mandataire. Le procédé utilise ainsi un accès du terminal mobile 31 à un réseau de communication radio pour contacter l'équipement d'administration 41.

Dans une première variante, la passerelle d'accès 30 est équipée d'un module de communication en champ proche. Il s'agit par exemple d'un module NFC, pour « Near Field Communication ». Le terminal mobile 31 est également équipé d'un tel module de communication en champ proche. La passerelle d'accès 30 détecte que la liaison vers le réseau de communication étendu n'est plus en état de fonctionnement (étape E1). Un voyant ou l'écran de la passerelle d'accès 30 indique à l'utilisateur qu'un problème est survenu. L'utilisateur lance sur son terminal mobile 31 une application d'aide au diagnostic et contacte (message M1) en champ proche la passerelle d'accès 31. Le terminal mobile 31 et la passerelle d'accès 30 s'appairent pour l'application d'aide au diagnostic. Cet appairage déclenche la transmission par la passerelle d'accès 30 vers l'application embarquée sur le terminal mobile 31 en NFC de son identifiant de passerelle et d'une ou de plusieurs données d'aide au diagnostic (étape E2). L'application d'aide au diagnostic s'exécutant sur le terminal mobile 31 contacte ensuite l'équipement d'administration 41 par exemple au moyen d'une requête HTTP et lui transmet l'identifiant et la ou les données dans une requête (étape E3).

Dans une deuxième variante, l'identifiant et la ou les données d'aide au diagnostic sont transmis à l'étape E2 par un canal de communication radio autre que NFC. Ceci permet le cas échéant de transmettre un plus grand volume de données d'aide au diagnostic de la passerelle d'accès vers le terminal mobile. Une fois la mise en contact en champ proche, le terminal mobile 31 peut être alors éloigné de la passerelle d'accès. Le canal de communication radio est par exemple de type WiFi, Bluetooth. L'identifiant et la ou les données d'aide au diagnostic peuvent être transmis en utilisant le protocole réseau UPnP (pour « Universal Plug and Play »).

Dans une troisième variante, le terminal mobile 31 met en oeuvre l'étape E1 de détection de la panne. La panne est par exemple détectée lorsqu'un échec d'une connexion HTTP est détecté ou bien encore à l'aide du protocole UPnP IGD (pour « Internet Gateway Device »). Dans un mode particulier de réalisation, le protocole UPnP IGD permet au terminal mobile 31 (en tant que point de contrôle ou « Control Point ») d'obtenir la dernière erreur survenue (LastConnectionError) sur la passerelle d'accès 30 grâce à l'action GetStatusInfo du service WANIPConnection (lorsque la passerelle d'accès 30 est connectée au réseau 1 par le protocole DHCP) ou du service WANPPPConnection (lorsque la passerelle d'accès 30 est connectée au réseau 1 par le protocole PPP pour « Point-to-Point Protocol »). Dans un autre mode de réalisation, la panne peut aussi être détectée en utilisant le protocole UPnP MD (pour « Manageable Device »). En effet, le protocole UPnP MD permet au terminal mobile 31 (en tant que point de contrôle) de lancer des diagnostics sur la passerelle d'accès 30 par l'intermédiaire des actions Ping, NSLookup, Traceroute, GetBandwidth ou SelfTest du service BasicManagement. Une fois la panne détectée, l'exécution de l'application d'aide au diagnostic est déclenchée afin d'obtenir à l'étape E2 l'identifiant et la ou les données d'aide au diagnostic.

Ces trois variantes peuvent également être cumulées entre elles le cas échéant. D'autres variantes sont également envisageables bien qu'elles ne soient pas décrites explicitement.

Dans ce premier mode de réalisation, le terminal mobile 31 appartient au réseau local 3. Toutefois, aucune limitation n'est attachée à cette appartenance au réseau local 3. On comprend aisément qu'il est également possible que le terminal mobile soit extérieur à ce réseau local.

Ce premier mode de réalisation s'appuie ainsi sur les éléments suivants :
- au niveau de la passerelle d'accès 30, une application permettant de détecter une panne affectant l'accès au réseau de communication étendu et de transmettre l'identifiant de la passerelle d'accès et une ou des données de diagnostic ;
- au niveau du terminal mobile 31, une application permettant d'obtenir l'identifiant de la passerelle et la ou les données d'aide au diagnostic et de transmettre les données obtenues vers l'équipement d'administration 31 ;
- au niveau de l'équipement d'administration 31, une application permettant de recevoir en provenance du terminal mobile 31 un identifiant de la passerelle affectée par la panne et une ou des données d'aide au diagnostic et de traiter ces informations comme si elles avaient été émises par la passerelle d'accès affectée par la panne. Cette application est par exemple de type Web Service.

Dans un deuxième mode de réalisation, une autre passerelle 50 joue le rôle de mandataire. Le procédé utilise ainsi un accès d'une autre passerelle d'accès 50 au même réseau d'accès ou bien à un autre réseau d'accès pour contacter l'équipement d'administration 41. Il suffit que cet accès soit lui-même en état de fonctionnement, lorsque celui de la passerelle d'accès est affecté par la panne.

On se place par la suite dans le cas où les deux passerelles d'accès sont équipées d'un module de communication radio, par exemple basse consommation. Il s'agit par exemple d'un module DECT ULE (pour « Digital Enhanced Cordless Telephone- Ultra Low Energy »). Cette norme DECT ULE utilise la bande de fréquence 1.7GHz-1.9GHz. Chaque passerelle d'accès 30, 50 diffuse un signal balise (« beacon » en anglais). Ce signal balise porte des informations telles que l'identité de la passerelle d'accès et son mode de fonctionnement.

La passerelle d'accès 30 détecte que la liaison vers le réseau de communication étendu n'est plus en état de fonctionnement (étape E1).

La passerelle d'accès 30 recherche si elle se situe dans une zone de couverture d'une autre passerelle d'accès 50. Il s'agit de balayer l'ensemble des fréquences radio allouées à la technologie DECT ULE afin d'identifier si au moins un signal balise d'une autre passerelle d'accès est reçu. La portée radio de la technologie DECT ULE est de l'ordre de 600 mètres à l'extérieur et 70 mètres en intérieur. Il est ici souligné que cette recherche n'est pas obligatoirement effectuée lors de la détection d'une panne affectant l'accès au réseau de communication étendu. La passerelle d'accès 30 peut notamment effectuer cette recherche lors de son initialisation et mettre régulièrement à jour une liste de passerelles d'accès à sa portée par l'intermédiaire de la norme DECT ULE.

On se place par la suite dans le cas où la passerelle d'accès 30 se situe dans la zone de couverture d'au moins une autre passerelle d'accès. Lorsque plusieurs autres passerelles d'accès sont détectées, la passerelle d'accès 30 sélectionne une autre passerelle d'accès 50 pour lui servir de relais. Cette sélection peut se baser sur un niveau de puissance du signal balise.

La passerelle d'accès 30 transmet alors au moyen d'un canal de communication son identifiant de passerelle et une ou plusieurs données d'aide au diagnostic vers l'autre passerelle d'accès 50 (étape E2).

L'autre passerelle d'accès 50 contacte l'équipement d'administration 41 par exemple au moyen d'une requête HTTP et lui transmet l'identifiant de la passerelle affectée par la panne et la ou les données dans une notification (étape E3) conforme au protocole CWMP. Cette notification est adaptée pour indiquer notamment que la passerelle d'accès 50 qui envoie la notification joue un rôle de mandataire de la passerelle d'accès 30 affectée par la panne. Ceci permet de sélectionner plus rapidement une passerelle d'accès pour jouer le rôle de mandataire et diminue ainsi le délai de transmission de l'identifiant et de la donnée d'aide au diagnostic à l'équipement d'administration.

Cette coopération entre les passerelles d'accès permet ainsi de transmettre les données d'aide au diagnostic à l'équipement d'administration 41.

Dans une variante de ce deuxième mode de réalisation, une passerelle d'accès agencée pour jouer le rôle de mandataire de dépannage diffuse dans le signal balise une donnée indiquant qu'elle offre un service de mandataire d'aide au dépannage. Ainsi lors de la sélection d'une autre passerelle d'accès, la passerelle d'accès 30 peut directement déterminer si l'autre passerelle d'accès 50 propose le service de mandataire d'aide au diagnostic.

Le deuxième mode de réalisation et sa variante sont décrits en utilisant la norme DECT ULE pour transmettre à la passerelle mandataire l'identifiant de la passerelle d'accès affectée par la panne et la ou les données d'aide au diagnostic. Il est également possible d'utiliser d'autres types de canaux de communication radio, comme par exemple le WiFi.

Ce deuxième mode de réalisation s'appuie ainsi sur les éléments suivants :
- au niveau de la passerelle d'accès 30, une application permettant de détecter une panne affectant l'accès au réseau de communication étendu et de transmettre l'identifiant de la passerelle d'accès et une ou des données de diagnostic à une autre passerelle d'accès ;
- au niveau de l'autre passerelle d'accès 50, une application permettant d'obtenir l'identifiant de la passerelle affectée par la panne et la ou les données d'aide au diagnostic et de transmettre les données obtenues vers l'équipement d'administration 31 ;
- au niveau de l'équipement d'administration 41, un module logiciel agencé pour recevoir en provenance d'une passerelle d'accès jouant un rôle de mandataire un identifiant de la passerelle affectée par la panne et une ou des données d'aide au diagnostic et pour traiter ces informations comme si elles avaient été émises directement par la passerelle d'accès affectée par la panne.

Nous allons maintenant décrire une passerelle d'accès 30 à un réseau de communication étendu dans un mode particulier de réalisation en référence à la figure 3. Une telle passerelle est agencée pour être administrée à distance par un équipement d'administration 41 et comprend notamment :
- une zone mémoire 301, agencée pour mémoriser une application qui comprend des instructions de code pour mettre en oeuvre les étapes du procédé d'aide au diagnostic à distance, tel que décrit en relation avec la figure 2 ;
- une mémoire de stockage, non représentée, agencée pour stocker des données utilisées lors de la mise en oeuvre du procédé d'aide au diagnostic à distance, tel que décrit en relation avec la figure 2 :
- un processeur 300 pour exécuter des instructions de code de modules logiciels ;
- un module d'interface 302 avec le réseau d'accès 1, agencé pour émettre et recevoir des données ;
- un module de communication 303, agencé pour envoyer et recevoir des données au moyen d'un canal de communication radio ;
- un module d'administration 304, agencé pour envoyer et recevoir des données d'administration à distance en provenance d'un équipement d'administration 41 ;
- un module de détection 305 d'une panne, agencé pour détecter une panne affectant l'accès de la passerelle au réseau de communication étendu par l'intermédiaire du module d'interface 302 ;
- un module de commande 306 d'un envoi à un dispositif d'un identifiant de la passerelle d'accès et d'une donnée d'aide à un diagnostic de la panne au moyen d'un canal de communication radio.

Il est ici souligné que la passerelle d'accès 30 comprend également d'autres modules de traitement, non représentés sur la figure 3, agencés pour mettre en oeuvre les différentes fonctions d'une passerelle d'accès.

Le module d'administration 304 met notamment en oeuvre les fonctions définies dans le rapport technique TR-069.

Le module d'interface 302 est par exemple un module xDSL.

Dans le premier mode de réalisation, en sa première variante, le module 303 est un module NFC. L'identifiant de la passerelle d'accès et la donnée d'aide au diagnostic sont envoyés par l'intermédiaire du module 303.

Dans le premier mode de réalisation, en sa deuxième variante, la passerelle d'accès 30 comprend en outre un deuxième module de communication radio, non représenté sur la figure 3, tel qu'un module WiFi, Bluetooth. Ce deuxième module peut notamment être agencé pour communiquer avec des équipements du réseau local 3. L'identifiant de la passerelle d'accès et la donnée d'aide au diagnostic sont envoyés par l'intermédiaire de ce deuxième module.

Dans le deuxième mode de réalisation, le module 303 est un module radio DECT ULE, WiFi ou DECT,... L'identifiant de la passerelle d'accès et la donnée d'aide au diagnostic sont envoyés par l'intermédiaire du module 303. Dans une variante, le module de commande 306 est en outre agencé pour recevoir dans le signal balise d'une donnée diffusée par une autre passerelle d'accès et indiquant que cette autre passerelle d'accès offre un service de mandataire d'aide au diagnostic.

Nous allons maintenant décrire un dispositif jouant un rôle de mandataire pour un service d'aide au diagnostic dans un mode particulier de réalisation en référence à la figure 4. Un tel dispositif comprend notamment :
- une zone mémoire 311, agencée pour mémoriser une application qui comprend des instructions de code pour mettre en oeuvre les étapes du procédé d'aide au diagnostic à distance, tel que décrit en relation avec la figure 2 ;
- une mémoire de stockage, non représentée, agencée pour stocker des données utilisées lors de la mise en oeuvre du procédé d'aide au diagnostic à distance, tel que décrit en relation avec la figure 2 :
- un processeur 310 pour exécuter des instructions de code de modules logiciels ;
- un module d'interface 312, agencé pour émettre et recevoir des données en provenance d'un réseau de communication étendu ;
- un module de communication 313, agencé pour envoyer et recevoir des données au moyen d'un canal de communication radio ;
- un module d'aide au diagnostic 316, agencé pour obtenir d'une passerelle d'accès affectée par une panne un identifiant de passerelle et une donnée d'aide à un diagnostic de la panne au moyen d'un canal de communication radio et commander un envoi à un équipement d'administration de l'identifiant et de la donnée obtenus par l'intermédiaire d'un moyen d'accès en état de fonctionnement.

Dans le premier mode de réalisation, le dispositif est un terminal mobile. Le module d'interface 312 est alors un module de communication par l'intermédiaire du réseau d'accès 2 mobile.

Dans la première variante, le module de communication 313 est un module NFC. L'identifiant de la passerelle d'accès et la donnée d'aide au diagnostic sont reçus par l'intermédiaire du module 313.

Dans la deuxième variante, le dispositif comprend en outre un deuxième module de communication radio, non représenté sur la figure 4, tel qu'un module WiFi, Bluetooth. L'identifiant de la passerelle d'accès et la donnée d'aide au diagnostic sont reçus par l'intermédiaire de ce deuxième module.

Dans la troisième variante, le dispositif comprend en outre un module de détection d'une panne 315, agencé pour détecter une panne affectant l'accès de la passerelle au réseau de communication étendu.

Dans le deuxième mode de réalisation, le dispositif est une autre passerelle d'accès, de structure similaire à la passerelle d'accès 30 décrite en relation avec la figure 3. Le dispositif comprend alors un module d'administration 314, agencé pour envoyer et recevoir des données d'administration à distance en provenance d'un équipement d'administration 41. Le module 313 est un module radio DECT ULE, WiFi ou DECT,... L'identifiant de la passerelle d'accès et la donnée d'aide au diagnostic sont reçus par l'intermédiaire du module 313. Dans une variante, le module d'aide au diagnostic 316 est en outre agencé pour commander la diffusion dans le signal balise d'une donnée indiquant que la passerelle d'accès offre un service de mandataire d'aide au diagnostic.

La technique d'aide au diagnostic est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 304, 305, 306 sont agencés pour mettre en oeuvre le procédé d'aide au diagnostic précédemment décrit. Il s'agit de préférence de modules logiciels comprenant des instructions logicielles pour faire exécuter celles des étapes du procédé d'aide au diagnostic précédemment décrit, mises en oeuvre par une passerelle d'accès. L'invention concerne donc aussi :
- un programme pour une passerelle d'accès, comprenant des instructions de code de programme destinées à commander l'exécution des étapes du procédé d'aide au diagnostic précédemment décrit, lorsque ledit programme est exécuté par cette passerelle d'accès ;
- un support d'enregistrement lisible par une passerelle d'accès sur lequel est enregistré le programme pour une passerelle.

Dans un mode de réalisation particulier, les modules 314, 315, 316 sont agencés pour mettre en oeuvre le procédé d'aide au diagnostic précédemment décrit. Il s'agit de préférence de modules logiciels comprenant des instructions logicielles pour faire exécuter celles des étapes du procédé d'aide au diagnostic précédemment décrit, mises en oeuvre par un dispositif jouant un rôle de mandataire pour un service d'aide au diagnostic. L'invention concerne donc aussi :
- un programme pour un dispositif, comprenant des instructions de code de programme destinées à commander l'exécution des étapes du procédé d'aide au diagnostic précédemment décrit, lorsque ledit programme est exécuté par ledit dispositif ;
- un support d'enregistrement lisible par un dispositif sur lequel est enregistré le programme pour un dispositif.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système d'aide au diagnostic, comprenant une passerelle d'accès 30 et au moins un dispositif 31, 50, tels que décrits précédemment.

## Revendications

1. Procédé d'aide au diagnostic à distance par un équipement d'administration (41) d'une passerelle d'accès (30), ladite passerelle permettant un accès à un réseau de communication étendu par l'intermédiaire d'un réseau d'accès (1), ledit procédé comprenant les étapes de :
- détection (E1) d'une panne affectant l'accès de la passerelle au réseau de communication étendu par l'intermédiaire dudit réseau d'accès ;
- obtention (E2) par un dispositif (31, 50) d'un identifiant de la passerelle d'accès et d'une donnée d'aide à un diagnostic de la panne au moyen d'un canal de communication radio, ledit dispositif étant distinct de ladite passerelle d'accès et de l'équipement d'administration ;
- envoi (E3) par ledit dispositif à l'équipement d'administration dudit identifiant et de ladite donnée obtenus par l'intermédiaire d'un moyen d'accès en état de fonctionnement, l'accès au réseau de communication étendu par le dispositif s'effectuant sans intervention de la passerelle.

2. Procédé d'aide au diagnostic à distance selon la revendication 1, comprenant en outre un appairage dudit dispositif avec la passerelle d'accès pour obtenir ledit identifiant et ladite donnée.

3. Procédé d'aide au diagnostic à distance selon la revendication 1, comprenant en outre une détection par la passerelle d'accès dudit dispositif.

4. Procédé d'aide au diagnostic à distance selon la revendication 3, comprenant en outre une diffusion par le dispositif d'une donnée indiquant qu'un service de mandataire d'aide au diagnostic est disponible.

5. Passerelle d'accès (30) agencée pour permettre un accès à un réseau de communication étendu par l'intermédiaire d'un réseau d'accès (1), ladite passerelle comprenant :
- un module d'administration (304), agencé pour envoyer et recevoir des données d'administration à distance en provenance d'un équipement d'administration (41) ;
- un module de détection (305) d'une panne affectant l'accès de la passerelle au réseau de communication étendu par l'intermédiaire dudit réseau d'accès ;
- un module d'envoi (306) à un dispositif (31, 50) d'un identifiant de la passerelle d'accès et d'une donnée d'aide à un diagnostic de la panne au moyen d'un canal de communication radio, ledit dispositif étant distinct de ladite passerelle d'accès et de l'équipement d'administration, ledit identifiant et ladite donnée étant destinés à être envoyés par ledit dispositif audit équipement d'administration par l'intermédiaire d'un moyen d'accès en état de fonctionnement, l'accès au réseau de communication étendu par le dispositif s'effectuant sans intervention de la passerelle.

6. Dispositif (31, 50) d'aide au diagnostic d'une panne affectant un accès d'une passerelle d'accès (30) à un réseau de communication étendu par l'intermédiaire d'un réseau d'accès (1), ledit dispositif étant distinct de ladite passerelle d'accès et de l'équipement d'administration, ledit dispositif comprenant :
- un module d'obtention (316) d'un identifiant de la passerelle d'accès et d'une donnée d'aide à un diagnostic de la panne au moyen d'un canal de communication radio et d'envoi à un équipement d'administration dudit identifiant et de ladite donnée obtenus par l'intermédiaire d'un moyen d'accès en état de fonctionnement, l'accès au réseau de communication étendu par le dispositif s'effectuant sans intervention de la passerelle, ledit équipement d'administration étant prévu pour administrer à distance la passerelle d'accès.

7. Système d'aide au diagnostic, comprenant une passerelle d'accès selon la revendication 5 et au moins un dispositif selon la revendication 6.

8. Programme pour une passerelle d'accès, comprenant des instructions de code de programme destinées à commander l'exécution de celles des étapes du procédé d'aide au diagnostic selon l'une des revendications 1 à 4 mises en oeuvre par la passerelle, lorsque ledit programme est exécuté par ladite passerelle, lesdites étapes comprenant :
- une détection d'une panne affectant l'accès de la passerelle au réseau de communication étendu par l'intermédiaire dudit réseau d'accès ;
- un envoi à un dispositif (31, 50) d'un identifiant de la passerelle d'accès et d'une donnée d'aide à un diagnostic de la panne au moyen d'un canal de communication radio, ledit dispositif étant distinct de ladite passerelle d'accès et de l'équipement d'administration, ledit identifiant et ladite donnée étant destinés à être envoyés par ledit dispositif audit équipement d'administration par l'intermédiaire d'un moyen d'accès en état de fonctionnement, l'accès au réseau de communication étendu par le dispositif s'effectuant sans intervention de la passerelle.

9. Support d'enregistrement lisible par une passerelle d'accès sur lequel est enregistré le programme selon la revendication 8.

10. Programme pour un dispositif, comprenant des instructions de code de programme destinées à commander l'exécution de celles des étapes du procédé d'aide au diagnostic selon l'une des revendications 1 à 4, lorsque ledit programme est exécuté par ledit dispositif, lesdites étapes comprenant :
- une obtention d'un identifiant d'une passerelle d'accès et d'une donnée d'aide à un diagnostic d'une panne au moyen d'un canal de communication radio, ladite panne affectant l'accès de la passerelle au réseau de communication étendu par l'intermédiaire d'un réseau d'accès et
- un envoi à un équipement d'administration dudit identifiant et de ladite donnée obtenus par l'intermédiaire d'un moyen d'accès en état de fonctionnement, l'accès au réseau de communication étendu par le dispositif s'effectuant sans intervention de la passerelle, ledit équipement d'administration étant prévu pour administrer à distance la passerelle d'accès .

11. Support d'enregistrement lisible par un dispositif sur lequel est enregistré le programme selon la revendication 10.

## Patentansprüche

1. Verfahren zur Unterstützung der Ferndiagnose eines Zugangsgateways (30) durch eine Verwaltungseinrichtung (41), wobei das Gateway einen Zugang zu einem Weitverkehrsnetz über ein Zugangsnetz (1) ermöglicht, wobei das Verfahren die Schritte umfasst:
- Detektion (E1) einer Störung, die den Zugang des Gateways zu dem Weitverkehrsnetz über das Zugangsnetz beeinträchtigt;
- Erhalten (E2), durch eine Vorrichtung (31, 50), einer Kennung des Zugangsgateways und eines Datenelements zur Unterstützung einer Diagnose der Störung mittels eines Funkkommunikationskanals, wobei die Vorrichtung von dem Zugangsgateway und der Verwaltungseinrichtung verschieden ist;
- Senden (E3) der Kennung und des Datenelements, die erhalten wurden, durch die Vorrichtung an die Verwaltungseinrichtung über ein Zugangsmittel im betriebsfähigen Zustand, wobei der Zugang zu dem Weitverkehrsnetz durch die Vorrichtung ohne Mitwirkung des Gateways erfolgt.

2. Verfahren zur Unterstützung der Ferndiagnose nach Anspruch 1, welches außerdem eine Paarung der Vorrichtung mit dem Zugangsgateway umfasst, um die Kennung und das Datenelement zu erhalten.

3. Verfahren zur Unterstützung der Ferndiagnose nach Anspruch 1, welches außerdem eine Detektion der Vorrichtung durch das Zugangsgateway umfasst.

4. Verfahren zur Unterstützung der Ferndiagnose nach Anspruch 3, welches außerdem das Rundsenden eines Datenelements durch die Vorrichtung umfasst, welches anzeigt, dass ein Proxy-Dienst zur Diagnoseunterstützung verfügbar ist.

5. Zugangsgateway (30), welches dafür ausgelegt ist, einen Zugang zu einem Weitverkehrsnetz über ein Zugangsnetz (1) zu ermöglichen, wobei das Gateway umfasst:
- ein Verwaltungsmodul (304), das dafür ausgelegt ist, Fernverwaltungsdaten, die von einer Verwaltungseinrichtung (41) stammen, zu senden und zu empfangen;
- ein Modul zur Detektion (305) einer Störung, die den Zugang des Gateways zu dem Weitverkehrsnetz über das Zugangsnetz beeinträchtigt;
- ein Modul zum Senden (306) einer Kennung des Zugangsgateways und eines Datenelements zur Unterstützung einer Diagnose der Störung mittels eines Funkkommunikationskanals an eine Vorrichtung (31, 50), wobei die Vorrichtung von dem Zugangsgateway und der Verwaltungseinrichtung verschieden ist, wobei die Kennung und das Datenelement dazu bestimmt sind, durch die Vorrichtung an die Verwaltungseinrichtung über ein Zugangsmittel im betriebsfähigen Zustand gesendet zu werden, wobei der Zugang zu dem Weitverkehrsnetz durch die Vorrichtung ohne Mitwirkung des Gateways erfolgt.

6. Vorrichtung (31, 50) zur Unterstützung der Diagnose einer Störung, die einen Zugang eines Zugangsgateways (30) zu einem Weitverkehrsnetz über ein Zugangsnetz (1) beeinträchtigt, wobei die Vorrichtung von dem Zugangsgateway und der Verwaltungseinrichtung verschieden ist, wobei die Vorrichtung umfasst:
- ein Modul zum Erhalten (316) einer Kennung des Zugangsgateways und eines Datenelements zur Unterstützung einer Diagnose der Störung mittels eines Funkkommunikationskanals und zum Senden der Kennung und des Datenelements, die erhalten wurden, an eine Verwaltungseinrichtung über ein Zugangsmittel im betriebsfähigen Zustand, wobei der Zugang zu dem Weitverkehrsnetz durch die Vorrichtung ohne Mitwirkung des Gateways erfolgt, wobei die Verwaltungseinrichtung dafür vorgesehen ist, das Zugangsgateway fernzuverwalten.

7. System zur Diagnoseunterstützung, welches ein Zugangsgateway nach Anspruch 5 und wenigstens eine Vorrichtung nach Anspruch 6 umfasst.

8. Programm für ein Zugangsgateway, welches Programmcodeanweisungen umfasst, die dazu bestimmt sind, die Ausführung derjenigen Schritte des Verfahrens zur Unterstützung der Ferndiagnose nach einem der Ansprüche 1 bis 4 zu steuern, die von dem Gateway durchgeführt werden, wenn das Programm von dem Gateway ausgeführt wird, wobei diese Schritte umfassen:
- eine Detektion einer Störung, die den Zugang des Gateways zu dem Weitverkehrsnetz über das Zugangsnetz beeinträchtigt;
- ein Senden einer Kennung des Zugangsgateways und eines Datenelements zur Unterstützung einer Diagnose der Störung mittels eines Funkkommunikationskanals an eine Vorrichtung (31, 50), wobei die Kennung und das Datenelement dazu bestimmt sind, durch die Vorrichtung an die Verwaltungseinrichtung über ein Zugangsmittel im betriebsfähigen Zustand gesendet zu werden, wobei der Zugang zu dem Weitverkehrsnetz durch die Vorrichtung ohne Mitwirkung des Gateways erfolgt.

9. Aufzeichnungsmedium, das von einem Zugangsgateway gelesen werden kann und auf dem das Programm nach Anspruch 8 aufgezeichnet ist.

10. Programm für eine Vorrichtung, welches Programmcodeanweisungen umfasst, die dazu bestimmt sind, die Ausführung derjenigen Schritte des Verfahrens zur Unterstützung der Ferndiagnose nach einem der Ansprüche 1 bis 4 zu steuern, wenn das Programm von der Vorrichtung ausgeführt wird, wobei diese Schritte umfassen:
- ein Erhalten einer Kennung eines Zugangsgateways und eines Datenelements zur Unterstützung einer Diagnose einer Störung mittels eines Funkkommunikationskanals, wobei die Störung den Zugang des Gateways zu dem Weitverkehrsnetz über ein Zugangsnetz beeinträchtigt, und
- ein Senden der Kennung und des Datenelements, die erhalten wurden, über ein Zugangsmittel im betriebsfähigen Zustand an eine Verwaltungseinrichtung, wobei der Zugang zu dem Weitverkehrsnetz durch die Vorrichtung ohne Mitwirkung des Gateways erfolgt, wobei die Verwaltungseinrichtung dafür vorgesehen ist, das Zugangsgateway fernzuverwalten.

11. Aufzeichnungsmedium, das von einer Vorrichtung gelesen werden kann und auf dem das Programm nach Anspruch 10 aufgezeichnet ist.

## Claims

1. Method for assisting in remote diagnosis, by a piece of administrative equipment (41), of an access gateway (30), said gateway allowing access to a wide area communication network via an access network (1), said method comprising the steps of:
- detection (E1) of a fault affecting access by the gateway to the wide area communication network via said access network;
- obtainment (E2), by a device (31, 50), of an identifier for the access gateway and of a datum for assisting in a diagnosis of the fault by means of a radio communication channel, said device being separate from said access gateway and from the administrative equipment;
- sending (E3), by said device, of said identifier and of said datum, which have been obtained via an access means in working order, to the administrative equipment, the access to the wide area communication network by the device being effected without the intervention of the gateway.

2. Method for assisting in remote diagnosis according to Claim 1, moreover comprising a pairing of said device with the access gateway in order to obtain said identifier and said datum.

3. Method for assisting in remote diagnosis according to Claim 1, moreover comprising a detection of said device by the access gateway.

4. Method for assisting in remote diagnosis according to Claim 3, moreover comprising a broadcast, by the device, of a datum indicating that a proxy service for assisting in diagnosis is available.

5. Access gateway (30) designed to allow access to a wide area communication network via an access network (1), said gateway comprising:
- an administrative module (304), designed to send and receive remote administration data from a piece of administrative equipment (41);
- a module (305) for detecting a fault affecting access by the gateway to the wide area communication network via said access network;
- a module (306) for sending to a device (31, 50) an identifier for the access gateway and a datum for assisting in a diagnosis of the fault by means of a radio communication channel, said device being separate from said access gateway and from the administrative equipment, said identifier and said datum being intended to be sent by said device to said administrative equipment via an access means in working order, the access to the wide area communication network by the device being effected without the intervention of the gateway.

6. Device (31, 50) for assisting in diagnosis of a fault affecting access by an access gateway (30) to a wide area communication network via an access network (1), said device being separate from said access gateway and from the administrative equipment, said device comprising:
- a module (316) for obtaining an identifier for the access gateway and a datum for assisting in a diagnosis of the fault by means of a radio communication channel and for sending to a piece of administrative equipment said identifier and said datum, which have been obtained via an access means in working order, the access to the wide area communication network by the device being effected without the intervention of the gateway, said administrative equipment being provided for remote administration of the access gateway.

7. System for assisting in diagnosis, comprising an access gateway according to Claim 5 and at least one device according to Claim 6.

8. Program for an access gateway, comprising program code instructions intended to control the execution of those of the steps of the method for assisting in diagnosis according to one of Claims 1 to 4 that are implemented by the gateway when said program is executed by said gateway, said steps comprising:
- detection of a fault affecting access by the gateway to the wide area communication network via said access network;
- sending, to a device (31, 50), of an identifier for the access gateway and of a datum for assisting in a diagnosis of the fault by means of a radio communication channel, said device being separate from said access gateway and from the administrative equipment, said identifier and said datum being intended to be sent by said device to said administrative equipment via an access means in working order, the access to the wide area communication network by the device being effected without the intervention of the gateway.

9. Recording medium that is readable by an access gateway and on which the program according to Claim 8 is recorded.

10. Program for a device, comprising program code instructions intended to control the execution of those of the steps of the method for assisting in diagnosis according to one of Claims 1 to 4 when said program is executed by said device, said steps comprising:
- obtainment of an identifier for an access gateway and of a datum for assisting in a diagnosis of a fault by means of a radio communication channel, said fault affecting the access by the gateway to the wide area communication network via an access network, and
- sending, to a piece of administrative equipment, of said identifier and of said datum, which have been obtained via an access means in working order, the access to the wide area communication network by the device being effected without the intervention of the gateway, said administrative equipment being provided for remote administration of the access gateway.

11. Recording medium that is readable by a device and on which the program according to Claim 10 is recorded.
